# EUROPEAN PATENT APPLICATION

(11) **EP 2 767 430 A1**
(43) Date of publication of application: **20.08.2014**
(21) Application number: 11873851.7
(22) Date of filing: 11.10.2011
(51) Int. Cl.: B60L 11/18, H02J 7/00

(54) **CHARGING CONTROL DEVICE FOR VEHICLE, AND VEHICLE EQUIPPPED WITH SAME**

(71) Applicant: Toyota Jidosha Kabushiki Kaisha, Toyota-shi, Aichi 471-8571 (JP)
(72) Inventor: MASUDA, Tomokazu, Toyota-shi Aichi 471-8571 (JP); TSUTSUI, Yusuke, Toyota-shi Aichi 471-8571 (JP)
(74) Representative: TBK
(86) International application number: PCT/JP2011/073306
(87) International publication number: WO 2013/054387

(57) **Abstract**

A charger (24) is configured to charge a power storage device (12). An ECU (28) is configured to control charging of the power storage device by the charger. While charging of the power storage device is not executed, the ECU operates in a sleep mode in which power consumption is smaller than that in a wakeup mode in which charging control is being executed, until a pilot signal (CPLT) is detected. After charging of the power storage device is ended, the ECU operates in an intermittent activation mode in which a wait mode and the wakeup mode are regularly switched to each other, until stoppage of oscillation of the pilot signal is detected.

## Description

### TECHNICAL FIELD

The present invention relates to a vehicle charging control apparatus and a vehicle equipped with the same, and particularly relates to a charging control apparatus for a vehicle configured in such a manner that a power storage device mounted on the vehicle is chargeable by a power supply located externally to the vehicle, as well as a vehicle equipped with the charging control apparatus.

### BACKGROUND ART

In recent years, the electric vehicle and the hybrid vehicle have been of interest as they are environmentally friendly vehicles. These vehicles are each mounted with an electric motor which generates drive force for the vehicle to travel, and a power storage device which stores electric power to be supplied to the electric motor. The hybrid vehicle is a vehicle mounted further with an internal combustion engine as a motive power source, in addition to the electric motor.

Such vehicles include a vehicle which is known as having its power storage device chargeable by a power supply located externally to the vehicle (hereinafter, this power supply will also be referred to as "external power supply" and the manner of charging the power storage device by the external power supply will also be referred to as "external charging"). For example, a power supply outlet provided in a house and a charging port provided in the vehicle can be connected to each other by a charging cable to thereby allow electric power to be supplied from an ordinary household power supply to the power storage device. In the following, such a vehicle having its power storage device chargeable by a power supply located externally to the vehicle will also be referred to as "plug-in vehicle."

Japanese Patent Laying-Open No. 2009-171733 (PTD 1) discloses a charging control apparatus for such a plug-in vehicle. The charging control apparatus uses, as an activation signal for a vehicle charging system, pilot signal CPLT generated by a control pilot circuit which is provided on a charging cable. This pilot signal CPLT is essentially intended to be used for the vehicle's system to determine the state of connection of the charging cable, whether electric power can be supplied from an external power supply to the vehicle or not, and the rating of charging current, for example. This charging control apparatus uses this pilot signal CPLT also as an activation signal for the charging system (see PTD 1).

### CITATION LIST

### PATENT DOCUMENT

PTD 1: Japanese Patent Laying-Open No. 2009-171733
PTD 2: Japanese Patent Laying-Open No. 2010-148213

### SUMMARY OF INVENTION

### TECHNICAL PROBLEM

Use of pilot signal CPLT as a system activation signal for external charging causes increase of dark current in the vehicle, due to detection of input of pilot signal CPLT. Dark current is standby current consumed during stoppage of the vehicle system. Increase of dark current causes reduction of the battery voltage while the vehicle system is stopped, resulting in adverse influences on various system operations.

The charging control apparatus disclosed in PTD 1 is advantageous in that pilot signal CPLT generated on the charging cable can be used as an activation signal for the charging system. How to reduce dark current which may be increased due to detection of input of pilot signal CPLT, however, has not particularly been studied.

In view of the above, an object of the present invention is to reduce dark current involved in external charging, by a charging control apparatus for a vehicle configured in such a manner that a power storage device mounted on the vehicle can undergo external charging.

### SOLUTION TO PROBLEM

According to the present invention, a charging control apparatus for a vehicle is configured in such a manner that a power storage device mounted on the vehicle is chargeable by a power supply located externally to the vehicle, and includes a charging device and a controller. The charging device is configured to charge the power storage device. The controller is configured to control charging of the power storage device by the charging device. While charging of the power storage device is not executed, the controller operates in a sleep mode in which power consumption is smaller than that in a normal mode in which charging control is being executed, before a predetermined first signal indicating a user's intention to request charging is detected. The controller operates in an intermittent activation mode in which the sleep mode and the normal mode are switched to each other, after charging of the power storage device is ended, until a predetermined second signal indicating a user's intention to end charging is detected.

Preferably, the controller operates in a first sleep mode (sleep mode) in which a main clock is stopped and the first signal is to be accepted as hard interrupt, until the first signal is detected, and the controller in the intermittent activation mode regularly switches between a second sleep mode (wait mode) in which the main clock is operated and the normal mode (wakeup mode).

More preferably, the controller switches to the normal mode in response to detection of the first signal during the first sleep mode, the controller switches to the intermittent activation mode in response to ending of charging of the power storage device, and the controller switches to the first sleep mode in response to detection of the second signal.

Preferably, the first signal is a pilot signal (CPLT, S1) which is input to the vehicle in response to connection, to the vehicle, of a charging cable for transmitting electric power from the power supply to the vehicle.

Preferably, the first signal is a signal (PISW, C) indicating that a charging cable for transmitting electric power from the power supply to the vehicle is being connected to the vehicle.

Preferably, the first signal is a signal indicating that a lid of the vehicle to be connected with a charging cable for transmitting electric power from the power supply to the vehicle has become an open state.

Preferably, in response to connection, to the vehicle, of a charging cable for transmitting electric power from the power supply to the vehicle, a pilot signal is input to the vehicle. The second signal is that the pilot signal (CPLT, S1) does not oscillate or is not input.

Preferably, the second signal is a signal (PISW, C) indicating that a charging cable for transmitting electric power from the power supply to the vehicle is not being connected to the vehicle.

Preferably, the second signal is a signal indicating that a lid of the vehicle to be connected with a charging cable for transmitting electric power from the power supply to the vehicle has become a closed state.

According to the present invention, a vehicle includes a charging control apparatus for a vehicle as set forth above, and a power storage device charged by the charging control apparatus.

### ADVANTAGEOUS EFFECTS OF INVENTION

In accordance with the present invention, while charging of the power storage device is not executed, the controller operates in a sleep mode in which power consumption is smaller than that in a normal mode in which charging control is being executed, before a predetermined first signal indicating a user's intention to request charging is detected. The controller operates in an intermittent activation mode in which the sleep mode and the normal mode are switched to each other, after charging of the power storage device is ended, until a predetermined second signal indicating a user's intention to end charging is detected. In this way, the state before the first signal is detected and the state after the end of charging and before the second signal is detected are distinguished from each other so that the controller operates in an appropriate power saving mode.

Accordingly, the present invention can reduce, by the charging control apparatus for a vehicle configured in such a manner that a power storage device mounted on the vehicle can undergo external charging, dark current involved in external charging.

### BRIEF DESCRIPTION OF DRAWINGS

Fig. 1 is an overall block diagram of a vehicle to which applied a charging control apparatus according to a first embodiment of the present invention.
Fig. 2 is a functional block diagram of an ECU shown in Fig. 1.
Fig. 3 is a diagram showing transition of an operation mode of the ECU.
Fig. 4 is an equivalent circuit diagram of a control pilot circuit formed by a CPLT control circuit and the ECU.
Fig. 5 is a waveform diagram of a pilot signal.
Fig. 6 is a diagram showing an open/close detection circuit for a lid of an inlet.
Fig. 7 is a diagram showing a charging switch used for a user to instruct external charging to be started or ended.
Fig. 8 is an overall block diagram of a vehicle to which applied a charging control apparatus according to a second embodiment.
Fig. 9 is a functional block diagram of an ECU shown in Fig. 8.

### DESCRIPTION OF EMBODIMENTS

In the following, embodiments of the present invention will be described in detail with reference to the drawings. In the drawings, the same or corresponding parts are denoted by the same reference characters, and a description thereof will not be repeated.

### [First Embodiment]

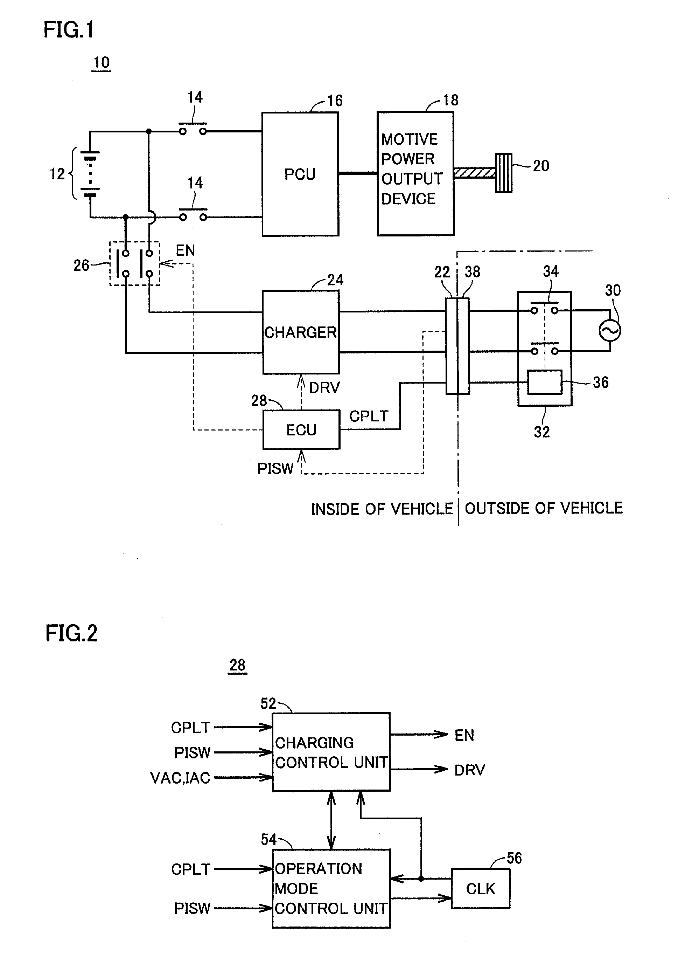

Fig. 1 is an overall block diagram of a vehicle to which applied a charging control apparatus according to a first embodiment of the present invention. Referring to Fig. 1, vehicle 10 includes a power storage device 12, a system main relay (hereinafter referred to as "SMR") 14, a power control unit (hereinafter referred to as "PCU") 16, a motive power output device 18, and a drive wheel 20. Vehicle 10 further includes an inlet 22, a charger 24, a charging relay 26, and an electronic control unit (hereinafter referred to as "ECU") 28.

On the outside of vehicle 10, an external power supply 30, an EVSE (Electric Vehicle Supply Equipment) 32, and a connector 38 are provided. EVSE 32 includes a CCID (Charging Circuit Interrupt Device) 34, and a CPLT control circuit 36.

Power storage device 12 is a rechargeable DC power supply and formed of a secondary battery such as nickel-metal hydride or lithium ion battery, for example. Power storage device 12 stores, in addition to electric power supplied from external power supply 30, electric power generated by motive power output device 18. A capacitor of a large capacitance may also be employed as power storage device 12. SMR 14 is provided between power storage device 12 and PCU 16. SMR 14 is a relay for electrically connecting/disconnecting power storage device 12 and PCU 16 to/from each other.

PCU 16 is shown as a collective body serving as an electric power converter which receives electric power from power storage device 12 for driving motive power output device 18. PCU 16 includes, for example, an inverter for driving a motor included in motive power output device 18, a converter for boosting electric power which is output from power storage device 12, and the like. Motive power output device 18 is shown as a collective body serving as a device for driving drive wheel 20. Motive power output device 18 includes, for example, a motor, an engine, and the like for driving drive wheel 20. Motive power output device 18 also generates electric power by means of the motor driving drive wheel 20, while the vehicle is braked for example, and outputs the generated electric power to PCU 16.

External power supply 30 is formed for example of a commercial system power supply. EVSE 32 is configured to be capable of breaking an electrical circuit which is given for supplying electric power from external power supply 30 to vehicle 10. EVSE 32 is provided, for example, on a charging cable which is given for supplying electric power from external power supply 30 to vehicle 10, or in a charging station which is given for supplying electric power through the charging cable to vehicle 10. CCID 34 is a circuit breaker provided on a power feeding path from external power supply 30 to vehicle 10, and controlled by CPLT control circuit 36.

CPLT control circuit 36 generates pilot signal CPLT for communicating predetermined information between EVSE 32 and vehicle 10 when external charging is done, and outputs the pilot signal through a control pilot line to vehicle 10. Pilot signal CPLT has its potential managed by vehicle 10, and CPLT control circuit 36 controls CCID 34 based on the potential of pilot signal CPLT. Namely, the potential of pilot signal CPLT can be managed by vehicle 10 to thereby enable CCID 34 to be remotely managed by vehicle 10. Pilot signal CPLT conforms for example to "SAE J1772 (SAE Electric Vehicle Conductive Charge Coupler)" of the United States.

Inlet 22 is configured to be connectable with a connector 38 of the charging cable which is given for feeding electric power from external power supply 30 to vehicle 10. While external charging of power storage device 12 by means of external power supply 30 is performed, inlet 22 receives electric power fed from external power supply 30.

Charger 24 is connected through charging relay 26 to a positive line PL and a negative line NL disposed between SMR 14 and PCU 16. Charger 24 includes a switching device adapted to make an electric power conversion, and converts electric power fed from external power supply 30 into a predetermined charging voltage (direct current), based on a control signal from ECU 28. The electric power having been voltage-converted by charger 24 is fed through charging relay 26 to power storage device 12, and accordingly power storage device 12 is charged. Charging relay 26 is provided between charger 24 and power storage device 12 for electrically connecting/disconnecting charger 24 and power storage device 12 to/from each other based on signal EN from ECU 28.

ECU 28 controls charger 24 and charging relay 26 through software processing which is implemented by execution of a pre-stored program by a CPU (Central Processing Unit) and/or hardware processing by a dedicated electronic circuit. When external charging is performed, ECU 28 manages ON/OFF of CCID 34 of EVSE 32. Specifically, ECU 28 manages the potential of pilot signal CPLT that it received from EVSE 32, to thereby remotely manage CCID 34. ECU 28 generates an instruction to activate/stop charger 24, and an electric power command indicating a target value of charging power, for example, and outputs them to charger 24.

Here, ECU 28 is capable of operating in the following three operation modes, namely wakeup mode, sleep mode, and intermittent activation mode. The wakeup mode refers to a state where ECU 28 is fully activated. When external charging is activated and during external charging, ECU 28 is in the wakeup mode. The sleep mode refers to a state where ECU 28 is suspended while external charging is not performed. In the sleep mode, a main clock in ECU 28 is also being stopped and power consumption is smaller relative to the wakeup mode. The intermittent activation mode is an operation mode while the charging cable is still connected after external charging is ended. In the intermittent activation mode, a wait mode and the wakeup mode are regularly switched to each other. The wait mode is similar to the sleep mode in that ECU 28 is being suspended, but different therefrom in that the main clock in ECU 28 is operating in the wait mode. Thus, the wait mode can regularly be switched to the wakeup mode. The power consumption of the sleep mode is smaller than that of the wait mode since the main clock is being stopped in the sleep mode.

Before input of pilot signal CPLT is detected, ECU 28 is in the sleep mode. When input of pilot signal CPLT is detected during the sleep mode, ECU 28 is switched to the wakeup mode. Specifically, the main clock of ECU 28 is being stopped during the sleep mode, and ECU 28 accepts pilot signal CPLT as hard interrupt. When rise (or may be fall) of pilot signal CPLT is detected, the operation mode is switched from the sleep mode to the wakeup mode, so that ECU 28 is activated. Pilot signal CPLT is input to vehicle 10 when connector 38 of the charging cable is connected to inlet 22, and can be regarded as a signal indicating a user's intention to request charging.

When external charging is ended (the charging cable is still connected), ECU 28 is switched to the intermittent activation mode. In the intermittent activation mode, the main clock is still operating during the wait mode which is a suspended state, and ECU 28 is regularly activated and pilot signal CPLT is monitored so that restart of external charging, disconnection of the charging cable, or the like can be detected.

While the charging cable is connected, pilot signal CPLT oscillates as described later herein. When stoppage of oscillation of pilot signal CPLT is detected, it is determined that the charging cable is disconnected from vehicle 10 (or power failure occurs to external power supply 30), and ECU 28 is switched to the sleep mode. Thus, the condition on which ECU 28 is activated (condition on which switch is made to the wakeup mode) is changed from the regular intermittent activation to detection of interrupt of pilot signal CPLT. In view of the fact that when the charging cable is disconnected from vehicle 10, oscillation of pilot signal CPLT is stopped, non-oscillating pilot signal CPLT can be regarded as a signal indicating a user's intention to end charging.

Fig. 2 is a functional block diagram of ECU 28 shown in Fig. 1. Referring to Fig. 1 together with Fig. 2, ECU 28 includes a charging control unit 52, an operation mode control unit 54, and a main clock 56. Charging control unit 52 receives pilot signal CPLT, cable connection signal PISW, and respective values of detected voltage VAC and current IAC of electric power fed from external power supply 30. Voltage VAC and current IAC are detected by a voltage sensor and a current sensor, respectively, which are not shown. Charging control unit 52 also receives a clock signal from main clock 56. Based on these signals each, charging control unit 52 generates signal EN for driving charging relay 26 and signal DRV for driving charger 24, and outputs these generated signals EN and DRV to charging relay 26 and charger 24, respectively. Charging control unit 52 informs operation mode control unit 54 of the state of execution of external charging (at least whether external charging is being executed/not being executed).

Operation mode control unit 54 receives pilot signal CPLT and cable connection signal PISW. Operation mode control unit 54 also receives information about the state of execution of external charging from charging control unit 52, and receives the clock signal from main clock 56. Based on these signals each, operation mode control unit 54 controls the operation mode of ECU 28.

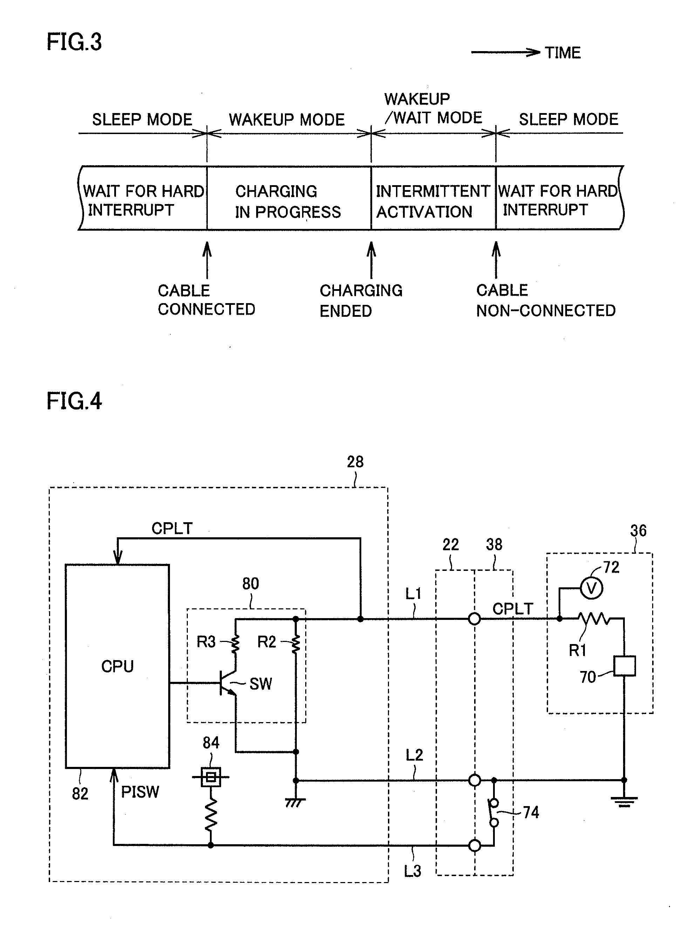

Fig. 3 is a diagram showing transition of the operation mode of ECU 28. Referring to Fig. 2 together with Fig. 3, it is assumed here that the operation mode is initially the sleep mode. In the sleep mode, a command to operate is not output from operation mode control unit 54 to main clock 56 and thus main clock 56 is being stopped. Operation mode control unit 54 is in the state of waiting for hard interrupt of pilot signal CPLT.

When connector 38 of the charging cable is connected to inlet 22 and hard interrupt of pilot signal CPLT which is output from EVSE 32 is detected, operation mode control unit 54 switches the operation mode to the wakeup mode and outputs the command to operate to main clock 56.

Charging control unit 52 starts external charging. When the external charging is thereafter ended, charging control unit 52 informs operation mode control unit 54 of the fact that the external charging has been ended. Then, operation mode control unit 54 switches the operation mode to the intermittent activation mode in which the wait mode and the wakeup mode are regularly switched to each other. Accordingly, ECU 28 is regularly activated intermittently, and the state of pilot signal CPLT is regularly monitored.

When connector 38 of the charging cable is thereafter removed from inlet 22 or when power failure thereafter occurs to external power supply 30, and accordingly oscillation of pilot signal CPLT is stopped, operation mode control unit 54 switches the operation mode of ECU 28 to the sleep mode. Accordingly, main clock 56 is stopped and operation mode control unit 54 switches again to the state of waiting for hard interrupt of pilot signal CPLT.

Thus, in the first embodiment, while external charging is not executed and before input of pilot signal CPLT generated by CPLT control circuit 36 of EVSE 32 is detected, ECU 28 is in the sleep mode in which power consumption is kept low.

When connector 38 of the charging cable is connected to inlet 22 and hard interrupt of pilot signal CPLT is detected, ECU 28 is switched to the wakeup mode. After a predetermined charging execution condition is met, external charging is performed. After the external charging is ended, ECU 28 is in the intermittent activation mode until detection of stoppage of oscillation of pilot signal CPLT which is caused by removal of the charging cable or by power failure of external power supply 30, and power consumption is kept low while the state of pilot signal CPLT is regularly monitored.

When stoppage of oscillation of pilot signal CPLT is detected, it is determined that the charging cable has been removed or power failure has occurred to external power supply 30, and accordingly ECU 28 is switched to the sleep mode.

Fig. 4 is an equivalent circuit diagram of a control pilot circuit formed by CPLT control circuit 36 and ECU 28. Referring to Fig. 4, CPLT control circuit 36 outputs pilot signal CPLT to vehicle's ECU 28 through connector 38 and inlet 22. Pilot signal CPLT essentially functions for informing vehicle's ECU 28 of an allowable value of the current (rated current) of the charging cable, and remotely managing CCID 34 (Fig. 1) from ECU 28, based on the potential of pilot signal CPLT which is managed by ECU 28. CPLT control circuit 36 controls CCID 34 based on a change in potential of pilot signal CPLT.

CPLT control circuit 36 includes an oscillator 70, a resistive element R1, and a voltage sensor 72. Oscillator 70 generates pilot signal CPLT which oscillates at a specified frequency (1 kHz for example) and a predetermined duty ratio. Voltage sensor 72 detects the potential of pilot signal CPLT.

Oscillator 70 generates non-oscillating pilot signal CPLT when the potential of pilot signal CPLT detected by voltage sensor 72 is close to a specified potential V1 (12 V for example). When the potential of pilot signal CPLT decreases from V1, oscillator 70 generates pilot signal CPLT which oscillates at a specified frequency and a predetermined duty ratio.

The potential of pilot signal CPLT is managed through a change of the resistance value by a resistive circuit 80 of ECU 28, as will be described later herein. The duty ratio is set based on an allowable value of the current of the charging cable that is determined in advance. When the potential of pilot signal CPLT decreases to a potential close to a specified potential V3 (6 V for example), CPLT control circuit 36 turns on CCID 34. CPLT control circuit 36 receives electric power fed from external power supply 30 (Fig. 1) to thereby operate.

In the vehicle, ECU 28 includes resistive circuit 80, a CPU (Control Processing Unit) 82, and a power supply 84. Resistive circuit 80 includes pull-down resistors R2, R3, and a switch SW. Pull-down resistor R2 is connected between the vehicle earth and a control pilot line L1 through which pilot signal CPLT is communicated. Pull-down resistor R3 and switch SW are connected in series to each other and connected in parallel with pull-down resistor R2. Switch SW is turned on/off in response to a control signal from CPU 82.

This resistive circuit 80 manages the potential of pilot signal CPLT. Specifically, in response to connection of connector 38 to inlet 22, resistive circuit 80 reduces the potential of pilot signal CPLT to a specified potential V2 (9 V for example) by means of pull-down resistor R2. Then, when preparation for charging is completed in the vehicle, CPU 82 turns on switch SW and resistive circuit 80 reduces the potential of pilot signal CPLT to specified potential V3 by means of pull-down resistors R2, R3. Thus, the potential of pilot signal CPLT can be managed by means of resistive circuit 80 so that CCID 34 can be managed remotely from ECU 28.

Connector 38 is provided with a limit switch 74. When inlet 22 and connector 38 are connected to each other, a signal line L3 and a ground line L2 are connected respectively to the opposite ends of limit switch 74. To signal line L3, a voltage is applied from power supply 84. When connector 38 is connected to inlet 22, limit switch 74 is turned on, so that the potential of signal line L3 changes to the ground level. Cable connection signal PISW has its logic state changed depending on the voltage level of signal line L3.

Accepting pilot signal CPLT as hard interrupt during the sleep mode, CPU 82 is switched to the wakeup mode. When connector 38 is connected to inlet 22, the potential of pilot signal CPLT decreases from V1 to V2 and pilot signal CPLT oscillates. CPU 82 detects an allowable value of the current of the charging cable, based on the duty ratio of pilot signal CPLT.

When the allowable value of the current of the charging cable is detected and preparation for charging of power storage device 12 (Fig. 1) is completed, CPU 82 turns on switch SW. Accordingly, the potential of pilot signal CPLT is reduced to V3 and CCID 34 in EVSE 32 is turned on. After this, CPU 82 turns on charging relay 26 (Fig. 1) and drives charger 24.

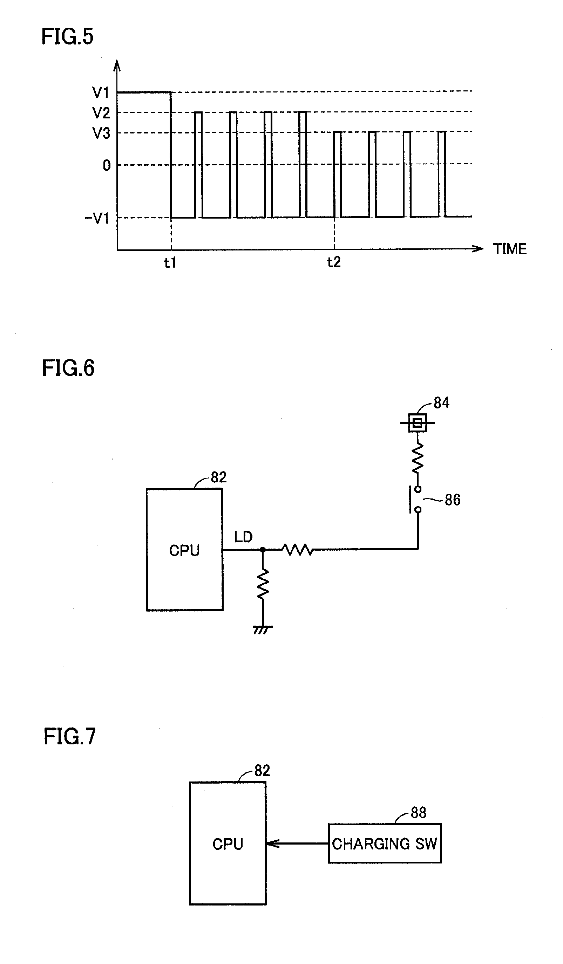

Fig. 5 is a waveform diagram of pilot signal CPLT. Referring to Fig. 4 together with Fig. 5, it is assumed here that connector 38 is not connected to inlet 22 prior to time t1. Before time t1, CPU 82 (ECU 28) is in the sleep mode and pilot signal CPLT has potential V1 and is not oscillating.

At time t1, connector 38 is connected to inlet 22. Pilot signal CPLT is then input to CPU 82. In response to detection of hard interrupt of pilot signal CPLT by CPU 82, the operation mode is switched to the wakeup mode. The potential of pilot signal CPLT is reduced by pull-down resistor R2 from V1 to V2 and pilot signal CPLT oscillates.

At time t2, preparation for external charging is completed. Switch SW of resistive circuit 80 is then turned on by CPU 82. Accordingly, the potential of pilot signal CPLT is further reduced by pull-down resistors R2, R3 from V2 to V3. When the potential of pilot signal CPLT is reduced to V3, CCID 34 is turned on by CPLT control circuit 36 in EVSE 32.

Thus, in the first embodiment, while external charging is not executed, ECU 28 operates in the sleep mode in which power consumption is smaller than that in the wakeup mode, before pilot signal CPLT is detected. In contrast, ECU 28 operates in the intermittent activation mode, after external charging is ended, until non-oscillation of pilot signal CPLT is detected. In this way, the state before pilot signal CPLT is detected is distinguished from the state after the end of charging and until detection of non-oscillation of pilot signal CPLT so that ECU 28 operates in an appropriate power saving mode. This first embodiment can thus reduce dark current involved in external charging.

### [First Modification]

In the first embodiment, the operation mode of ECU 28 is switched from the intermittent activation mode to the sleep mode in response to detection that pilot signal CPLT stops oscillating. Alternatively, the operation mode thereof may be switched to the sleep mode in response to detection of non-input (voltage 0 V) of pilot signal CPLT instead of detection of stoppage of oscillation of pilot signal CPLT. The fact that pilot signal CPLT is not input can also be regarded as a user's intention to end charging.

Thus, even when oscillation of pilot signal CPLT is unstable due to an abnormality of external power supply 30 or the charging cable, the operation mode can surely and appropriately be switched.

### [Second Modification]

The intermittent activation mode may be switched to the sleep mode in response to cable connection signal PISW instead of pilot signal CPLT. Namely, in response to detection through cable connection signal PISW that inlet 22 and connector 38 of the charging cable are not connected to each other, the operation mode may be switched to the sleep mode. This cable connection signal PISW can also be regarded as a signal indicating a user's intention to end charging.

Cable connection signal PISW does not enable power failure of external power supply 30 or non-connection between the charging cable and external power supply 30 to be detected. Therefore, it is necessary to separately monitor pilot signal CPLT in order to switch the operation mode to the sleep mode when external power supply 30 fails for example.

### [Third Modification]

In the above first embodiment, the operation mode of ECU 28 is switched from the sleep mode to the wakeup mode in response to detection of hard interrupt of pilot signal CPLT. In this case as well, cable connection signal PISW may be used instead of pilot signal CPLT. Specifically, the sleep mode may be switched to the wakeup mode in response to detection of a voltage variation (change from a power supply voltage to 0 V) of cable connection signal PISW. Cable connection signal PISW can also be regarded as a signal indicating a user's intention to request charging.

As described above, cable connection signal PISW does not enable power failure of external power supply 30 or non-connection between the charging cable and external power supply 30 to be detected. Therefore, it is preferable that, until input of pilot signal CPLT is detected, ECU 28 is operated in the intermittent activation mode.

### [Fourth Modification]

As to switching from the sleep mode to the wakeup mode, the sleep mode may be switched to the wakeup mode in response to detection of an open state of a lid of inlet 22 instead of detection of hard interrupt of pilot signal CPLT.

Fig. 6 is a diagram showing an open/close detection circuit for a lid of inlet 22. Referring to Fig. 6, this detection circuit includes a CPU 82, a power supply 84, and a relay 86. Relay 86 is turned on/off in response to open/close of the lid of inlet 22. For example, in response to change of the lid to the open state, relay 86 is turned on and the voltage of signal LD increases. Thus, the open state of the lid is detected by CPU 82, and accordingly the operation mode of ECU 28 is switched to the wakeup mode. Signal LD can also be regarded as a signal indicating a user's intention to request charging.

### [Fifth Modification]

The intermittent activation mode may also be switched to the sleep mode in response to the open/close state of the lid of inlet 22, instead of hard interrupt of pilot signal CPLT. Specifically, in response to detection of the closed state of the lid of inlet 22, the operation mode may be switched from the intermittent activation mode to the sleep mode.

Referring to Fig. 6, as the lid is changed to the closed state, relay 86 is accordingly turned off and the voltage of signal LD decreases. Thus, CPU 82 detects the closed state of the lid and accordingly the operation mode of ECU 28 is switched to the sleep mode. Signal LD can also be regarded as a signal indicating a user's intention to end charging.

### [Sixth Modification]

A charging switch may be provided for a user to give an instruction to start or end external charging. The sleep mode may be switched to the wakeup mode and the intermittent activation mode may be switched to the sleep mode, in response to ON/OFF of the charging switch instead of pilot signal CPLT.

Fig. 7 is a diagram showing a charging switch for a user to instruct external charging to be started or ended. Referring to Fig. 7, a charging switch 88 can be managed by a user, and is turned on when external charging is to be performed and turned off when external charging has been ended. Charging switch 88 is turned on/off in accordance with a user's intention, regardless of the state of connection of the charging cable or pilot signal CPLT.

When charging switch 88 is turned on by a user, the operation mode of ECU 28 is accordingly switched from the sleep mode to the wakeup mode. When charging switch 88 is turned off by a user, the operation mode of ECU 28 is accordingly switched from the intermittent activation mode to the sleep mode. A signal generated by charging switch 88 can also be regarded as a signal indicating a user's intention to end charging.

### [Second Embodiment]

The present invention is also applicable to a charging control apparatus for performing external charging by means of a quick DC (Direct Current) charging station.

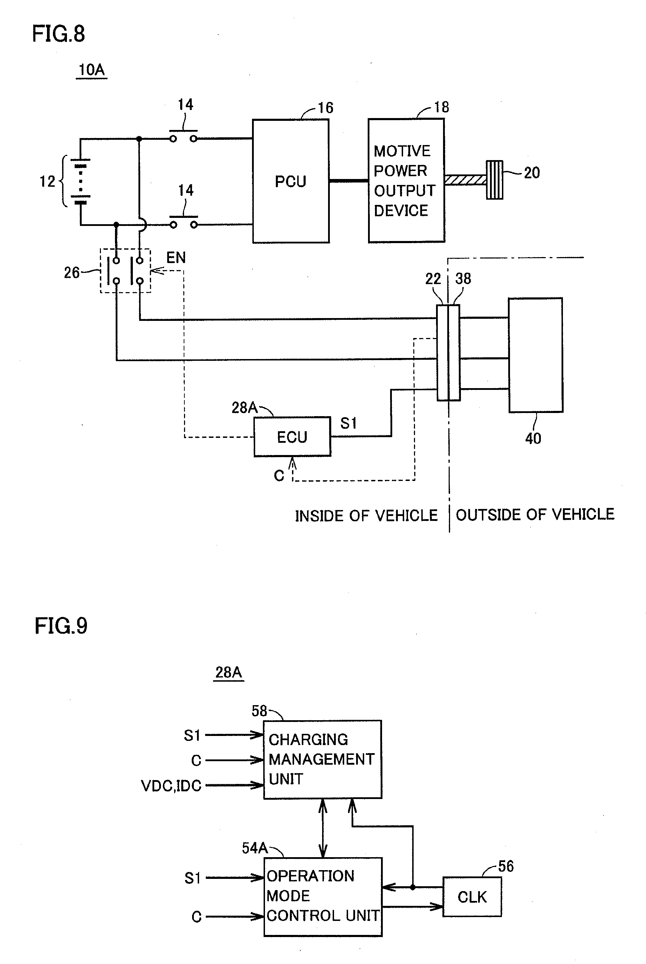

Fig. 8 is an overall block diagram of a vehicle to which applied a charging control apparatus according to a second embodiment. Referring to Fig. 8, a vehicle 10A includes the same features as those of vehicle 10 shown in Fig. 1, except that vehicle 10A does not include charger 24 and includes an ECU 28A instead of ECU 28.

Quick DC charging station 40 is disposed outside the vehicle. Quick DC charging station 40 generates a variety of control signals for performing external charging, and typically generates charging start signal S1 for starting external charging and charging stop signal S2 for stopping external charging, for example. Cable connection signal C is used for detecting the state of connection between connector 38 of quick DC charging station 40 and inlet 22 of vehicle 10A. When connector 38 is connected to inlet 22, the state of voltage changes from the state of voltage while they are not connected to each other. Charging start signal S1 and charging stop signal S2 correspond to pilot signal CPLT in the first embodiment, and cable connection signal C corresponds to cable connection signal PISW in the first embodiment.

ECU 28A manages external charging (manages activation/stoppage of charging, manages the amount of charging, for example) and controls the operation mode, through software processing which is implemented by execution of a pre-stored program by a CPU (Central Processing Unit) and/or hardware processing by a dedicated electronic circuit.

As to the operation mode, ECU 28A is also capable of operating in the three modes: wakeup mode, sleep mode, and intermittent activation mode, like ECU 28 in the first embodiment. In response to detection of input of charging start signal S1 during the sleep mode, ECU 28A is switched to the wakeup mode. Specifically, in the sleep mode, the main clock of ECU 28A is being stopped, and ECU 28A accepts charging start signal S1 as hard interrupt. When rise (or may be fall) of charging start signal S1 is detected, the operation mode is switched from the sleep mode to the wakeup mode, so that ECU 28A is activated. Charging start signal S1 can be regarded as a signal indicating a user's intention to request charging.

When external charging is ended (the charging cable is still connected), ECU 28A is switched to the intermittent activation mode. In the intermittent activation mode, the main clock is still operating during the wait mode which is a suspended state, and ECU 28A is regularly activated and charging start signal S1 is monitored so that restart of external charging, disconnection of the charging cable, or the like can be detected.

When it is detected from cable detection signal C for example that inlet 22 and connector 38 of quick DC charging station 40 are not connected to each other, ECU 28A is switched to the sleep mode. Thus, the condition on which ECU 28A is activated (condition on which switch is made to the wakeup mode) is changed from the regular intermittent activation to detection of interrupt of charging start signal S1. Cable connection signal C can be regarded as a signal indicating a user's intention to end charging.

The intermittent activation mode may be switched to the sleep mode in response to fall of charging start signal S1 or rise of charging stop signal S2 or in response to detection of the closed state of the lid, instead of cable connection signal C. The sleep mode may also be switched to the wakeup mode in response to detection of cable connection signal C instead of charging start signal S1, or detection of the open state of the lid.

Fig. 9 is a functional block diagram of ECU 28A shown in Fig. 8. Referring to Fig. 9, ECU 28A includes a charging management unit 58, an operation mode control unit 54A, and a main clock 56. Charging management unit 58 receives charging start signal S1, cable connection signal C, and respective values of detected voltage VDC and current IDC of electric power fed from quick DC charging station 40. Voltage VDC and current IDC are detected by a voltage sensor and a current sensor, respectively, which are not shown. Charging management unit 58 also receives a clock signal from main clock 56. Based on these signals each, charging management unit 58 manages activation/stoppage of charging (controls ON/OFF of charging relay 26 for example), and manages the charging amount of power storage device 12. Charging management unit 58 also informs operation mode control unit 54A of the state of execution of external charging (at least whether external charging is being executed/not being executed).

Operation mode control unit 54A receives charging start signal S1 and cable connection signal C. Operation mode control unit 54A also receives information about the state of execution of external charging from charging management unit 58. Operation mode control unit 54A controls the operation mode of ECU 28A, based on these signals each.

Specifically, when hard interrupt of charging start signal S1 is detected during the sleep mode, operation mode control unit 54A switches the operation mode of ECU 28A to the wakeup mode, and outputs a command to operate to main clock 56.

External charging is thus started. Charging management unit 58 thereafter informs operation mode control unit 54A of the fact that external charging has been ended. Then, operation mode control unit 54A switches the operation mode to the intermittent activation mode. Accordingly, ECU 28A is regularly activated intermittently, and the state of charging start signal S1 is regularly monitored.

After this, it is detected from cable connection signal C that inlet 22 and connector 38 of quick DC charging station 40 are not connected to each other. Then, operation mode control unit 54A switches the operation mode of ECU 28A to the sleep mode. Accordingly, main clock 56 is also stopped, and operation mode control unit 54A is switched again to the state of waiting for hard interrupt of charging start signal S1.

As seen from the foregoing, the second embodiment in which external charging is executed by means of quick DC charging station 40 can also achieve effects similar to those of the first embodiment.

It should be noted that while charger 24 in the first embodiment is connected between power storage device 12 and SMR 14, charger 24 may also be connected between SMR 14 and PCU 16. Likewise, while inlet 22 in the second embodiment is connected between power storage device 12 and SMR 14, inlet 22 may also be connected between SMR 14 and PCU 16.

It should be noted that aforementioned charger 24 corresponds to one embodiment of "charging device" of the present invention, and aforementioned quick DC charging station 40 also corresponds to one embodiment of "charging device" of the present invention. Aforementioned ECUs 28, 28A each correspond to one embodiment of "controller" of the present invention.

It should be construed that the embodiments disclosed herein are given by way of illustration in all respects, not by way of limitation. It is intended that the scope of the present invention is defined by claims, not by the above description of the embodiments, and encompasses all modifications and variations equivalent in meaning and scope to the claims.

### REFERENCE SIGNS LIST

10, 10A vehicle; 12 power storage device; 14 SMR; 16 PCU; 18 motive power output device; 20 drive wheel; 22 inlet; 24 charger; 26 charging relay; 28, 28A ECU; 30 external power supply; 32 EVSE; 34 CCID; 36 CPLT control circuit; 38 connector; 40 quick DC charging station; 52 charging control unit; 54, 54A operation mode control unit; 56 main clock; 58 charging management unit; 70 oscillator; 72 voltage sensor; 74 limit switch; 80 resistive circuit; 82 CPU; 84 power supply; 86 relay; 88 charging switch; R1 resistive element; R2, R3 pull-down resistor; SW switch; L1 control pilot line; L2 ground line; L3 signal line

## Claims

1. A charging control apparatus for a vehicle (10) configured in such a manner that a power storage device (12) mounted on the vehicle is chargeable by a power supply located externally to the vehicle, comprising:
a charging device (24, 40) configured to charge said power storage device; and
a controller (28, 28A) configured to control charging of said power storage device by said charging device,
while charging of said power storage device is not executed,
said controller operating in a sleep mode in which power consumption is smaller than that in a normal mode in which charging control is being executed, before a predetermined first signal indicating a user's intention to request charging is detected,
said controller operating in an intermittent activation mode in which said sleep mode and said normal mode are switched to each other, after charging of said power storage device is ended, until a predetermined second signal indicating a user's intention to end charging is detected.

2. The charging control apparatus for a vehicle according to claim 1, wherein said controller operates in a first sleep mode in which a main clock (56) is stopped and said first signal is to be accepted as hard interrupt, until said first signal is detected, and said controller in said intermittent activation mode regularly switches between a second sleep mode in which said main clock is operated and said normal mode.

3. The charging control apparatus for a vehicle according to claim 2, wherein said controller switches to said normal mode in response to detection of said first signal during said first sleep mode,
said controller switches to said intermittent activation mode in response to ending of charging of said power storage device, and
said controller switches to said first sleep mode in response to detection of said second signal.

4. The charging control apparatus for a vehicle according to any one of claims 1 to 3, wherein said first signal is a pilot signal (CPLT, S1) which is input to said vehicle in response to connection, to said vehicle, of a charging cable for transmitting electric power from said power supply to said vehicle.

5. The charging control apparatus for a vehicle according to any one of claims 1 to 3, wherein said first signal is a signal (PISW, C) indicating that a charging cable for transmitting electric power from said power supply to said vehicle is being connected to said vehicle.

6. The charging control apparatus for a vehicle according to any one of claims 1 to 3, wherein said first signal is a signal (LD) indicating that a lid of said vehicle to be connected with a charging cable for transmitting electric power from said power supply to said vehicle has become an open state.

7. The charging control apparatus for a vehicle according to any one of claims 1 to 3, wherein
in response to connection, to said vehicle, of a charging cable for transmitting electric power from said power supply to said vehicle, a pilot signal (CPLT, S1) is input to said vehicle, and
said second signal is that said pilot signal does not oscillate or is not input.

8. The charging control apparatus for a vehicle according to any one of claims 1 to 3, wherein said second signal is a signal (PISW, C) indicating that a charging cable for transmitting electric power from said power supply to said vehicle is not being connected to said vehicle.

9. The charging control apparatus for a vehicle according to any one of claims 1 to 3, wherein said second signal is a signal (LD) indicating that a lid of said vehicle to be connected with a charging cable for transmitting electric power from said power supply to said vehicle has become a closed state.

10. A vehicle comprising:
a charging control apparatus for a vehicle recited in any one of claims 1 to 3; and
a power storage device (12) charged by said charging control apparatus.
